# EUROPÄISCHE PATENTSCHRIFT

(11) **EP 1 683 258 B1**
(45) Veröffentlichungstag und Bekanntmachung des Hinweises auf die Patenterteilung: **17.10.2018**
(21) Anmeldenummer: 04789571.9
(22) Anmeldetag: 29.10.2004
(51) Int. Cl.: H02M 3/337, H02J 7/35, H02M 1/00, H02J 3/38, H02M 7/48

(54) **VERFAHREN ZUR EINSTELLUNG DER SCHALTZEITEN, INSBESONDERE TOTZEITEN, IN EINEM WECHSELRICHTER IN ABHÄNGIGKEIT VON DER ERFASSTEN ENERGIE SOWIE WECHSELRICHTER**
METHOD FOR SETTING SWITCHING TIMES, IN PARTICULAR IDLE TIMES, OF AN INVERTER BASED ON DETECTED POWER, AND INVERTER
PROCEDE POUR REGLER LES TEMPS DE COMMUTATION, NOTAMMENT LES TEMPS MORTS, D'UN ONDULEUR EN FONCTION DE L'ENERGIE DETECTEE, ET ONDULEUR

(30) Priorität: 31.10.2003 AT 17332003
(43) Veröffentlichungstag der Anmeldung: 26.07.2006
(73) Patentinhaber: Fronius International GmbH, 4643 Pettenbach (AT)
(72) Erfinder: LUGER, Andreas, A-4273 Kaltenberg (AT); BITTMANN, Clemens, A-4600 Wels (AT)
(74) Vertreter: Sonn & Partner Patentanwälte
(86) Internationale Anmeldenummer: PCT/AT2004/000382
(87) Internationale Veröffentlichungsnummer: WO 2005/043738

(56) Entgegenhaltungen:
- EP-A- 1 337 033
- US-A1- 2002 001 210
- US-A1- 2003 012 038
- PATENT ABSTRACTS OF JAPAN Bd. 018, Nr. 003 (E-1485), 6. Januar 1994 (1994-01-06) -& JP 05 244775 A (OKUMA MACH WORKS LTD), 21. September 1993 (1993-09-21)
- CALAIS M ET AL: "Multilevel converters for single-phase grid connected photovoltaic systems: an overview" SOLAR ENERGY, PERGAMON PRESS. OXFORD, GB, Bd. 66, Nr. 5, August 1999 (1999-08), Seiten 325-335, XP004362671 ISSN: 0038-092X
- PATENT ABSTRACTS OF JAPAN Bd. 1999, Nr. 02, 26. Februar 1999 (1999-02-26) -& JP 10 304675 A (YASKAWA ELECTRIC CORP), 13. November 1998 (1998-11-13)
- PATENT ABSTRACTS OF JAPAN Bd. 1997, Nr. 06, 30. Juni 1997 (1997-06-30) -& JP 09 047082 A (TOYO ELECTRIC MFG CO LTD), 14. Februar 1997 (1997-02-14)

## Beschreibung

Die Erfindung betrifft ein Verfahren für einen Solarwechselrichter, zum Einspeisen einer von einer Gleichspannungsquelle erzeugten Energie in ein Wechselspannungsnetz gemäß Anspruch 1.

Weiters betrifft die Erfindung einen Solarwechselrichter zum Einspeisen einer von einer Gleichspannungsquelle erzeugten Energie in ein Wechselspannungsnetz gemäß Anspruch 5. Bevorzugte Ausführungsformen sind in den abhängigen Ansprüchen definiert.

Der Aufbau bei aus dem Stand der Technik bekannten Wechselrichtern, insbesondere Solarwechselrichtern, besteht bevorzugt aus einem Brückenwechselrichter, einem Transformator, einem Gleichrichter, einem Tiefsetzsteller mit einer Vollbrücke und einem Ausgangsfilter. Eine Gleichspannungsquelle, insbesondere ein Solarmodul, wird dabei an den Wechselrichter angeschlossen, wogegen der Ausgang des Wechselrichters an ein Wechselspannungsnetz zur Einspeisung von Energie angeschlossen ist. Dabei wird die erzeugte Energie der Gleichspannungsquelle vom Brückenwechselrichter durch abwechselndes Schalten von parallel und seriell geschalteten Schaltelementen in Form einer Pulsweitenmodulation zerhackt und diese zerhackte Energie über den Transformator, der zwischen den in Serie geschalteten Schaltelementen angeschlossen ist, übertragen, worauf die übertragene Energie wiederum gleichgerichtet wird und über einen Tiefsetzsteller in das Wechselspannungsnetz eingespeist wird.

Die JP 08-228488 A, die JP 09-047082 A sowie die EP 0 871 285 A1 beschreiben Vorrichtungen und Verfahren zur Einstellung der Totzeit von Wechselrichtern in Abhängigkeit einer Ausgangsgröße.

Die US 2002/0001210 A1 offenbart ein Verfahren für einen Solarwechselrichter, bei dem die erzeugte Energie der Gleichspannungsquelle von einem Brückenwechselrichter durch abwechselndes Schalten von parallel und seriell geschalteten Schaltelementen in Form einer Pulsweitenmodulation zerhackt wird und diese zerhackte Energie über einen Transformator, der zwischen den in Serie geschalteten Schaltelementen angeschlossen ist, übertragen wird, worauf die übertragene Energie wiederum gleichgerichtet wird, wobei zur Leistungsanpassung die Schaltzeiten der Schaltelemente des Brückenwechselrichters gesteuert bzw. geregelt werden, wobei das Umschalten von einem Schaltelement zu einem weiteren in Serie geschalteten Schaltelement nach Ablauf einer Totzeit erfolgt, sodass die in den Schaltelementen gespeicherten parasitären Kapazitäten während der Totzeit vollständig umgeladen werden, wobei der von der Gleichspannungsquelle erzeugte über die Primärwicklung des Transformators fließende Strom erfasst wird, und daraus ein Mittelwert gebildet wird, und die Totzeit zum Umschalten von einem Schaltelement zu einem weiteren in Serie geschalteten Schaltelement des Brückenwechselrichters in Abhängigkeit des Mittelwerts des erfassten Stromes eingestellt wird.

Die US 2003/0012038 A1 zeigt eine Anordnung zur Umformung einer Gleichspannung in eine Wechselspannung unter Verwendung eines Wechselrichters und eines Tiefsetzstellers der gegenständlichen Art.

Schließlich zeigt die JP 05-244775 A ein Pulsweitenmodulationsverfahren der allgemeinen Art.

Nachteilig ist bei den aus dem Stand der Technik bekannten Solarwechselrichtern, dass eine Leistungsanpassung des Wechselrichters nur über die Pulsweitenmodulation des Brückenwechselrichters erfolgen kann, sodass nicht immer gewährleistet ist, dass dieser optimal betrieben wird. Wird beispielsweise weniger Energie von der Gleichspannungsquelle geliefert, so ist es möglich, dass die Pulsweite soweit reduziert wird, dass keine weitere Steuer- bzw. Regelmöglichkeit über die Pulsweite mehr vorhanden ist. Dies kann bei zu hoher Energielieferung über die Gleichspannungsquelle ebenfalls zu Stande kommen, da hierbei die Pulsweite auf das Maximum ausgeregelt wird, sodass wiederum keinerlei weiterer Steuer- bzw. Regelmöglichkeiten vorhanden sind.

Die Aufgabe der vorliegenden Erfindung besteht daher in der Schaffung eines Verfahrens für einen Solarwechselrichter zum Einspeisen einer von einer Gleichspannungsquelle erzeugten Energie in ein Wechselspannungsnetz und eines Solarwechselrichter , wobei der Wirkungsgrad in einfacher Form wesentlich erhöht wird.

Die erfindungsgemäße Aufgabe wird in verfahrensmäßiger Hinsicht dadurch gelöst, dass der von der Gleichspannungsquelle erzeugte über die Primärwicklung des Transformators fließende Strom in zyklischen Abständen oder permanent erfasst und daraus ein Mittelwert gebildet wird, und die Totzeit zum Umschalten von einem Schaltelement zu einem weiteren in Serie geschalteten Schaltelement des Brückenwechselrichters in Abhängigkeit des Mittelwerts des erfassten Stromes eingestellt wird, indem die Totzeit der Schaltelemente des Brückenwechselrichters aus einer Tabelle ausgewählt wird, in welcher Tabelle für verschiedenste Mittelwerte des Stromes entsprechende Werte für die Totzeit hinterlegt sind.

Somit kann in einfacher Form eine Anpassung des Wechselrichters an die gelieferte Eingangsleistung durchgeführt werden. Somit ist gewährleistet, dass der Wechselrichter immer optimal geregelt werden kann, wodurch der Wirkungsgrad wesentlich erhöht wird. Die Messung des Mittelwertes des über die Primärwicklung des Transformators fließende Stromes stellt eine Möglichkeit der Erfassung der Energie der Gleichspannungsquelle dar. Durch die Anpassung der Totzeit zum Umschalten der Schaltelemente wird sichergestellt, dass die in den Schaltelementen des Brückenwechselrichters gespeicherten parasitären Kapazitäten vollständig umgeladen werden können und gleichzeitig keine zu langen Schaltpausen eintreten können. Durch die Änderung der Frequenz der Schaltzeiten wird erreicht, dass die Schaltverluste proportional reduziert werden und somit der Wirkungsgrad der Schaltung wesentlich verbessert wird. In der Tabelle können neben der Totzeit für verschiedenste Mittelwerte des Stromes auch die Pulsdauer bzw. die Frequenz hinterlegt sein und ausgewählt werden.

Zusätzlich zur Totzeit kann auch die Periodendauer bzw. Frequenz für die Pulsweitenmodulation zum Umschalten von einem Schaltelement zu einem weiteren in Serie geschalteten Schaltelement des Brückenwechselrichters in Abhängigkeit des Mittelwertes des erfassten Stromes eingestellt werden.

Vorteilhafter Weise werden die Schaltzeiten der Schaltelemente des Brückenwechselrichters in Abhängigkeit des Mittelwerts des erfassten Stroms ausgewertet und automatisch festgelegt.

Vorteilhafter Weise werden die Schaltelemente zu entsprechend festgelegten Zeitpunkten angesteuert.

Weiters wird die Aufgabe der Erfindung auch durch einen oben genannten Solarwechselrichter gelöst, wobei eine Strommesseinrichtung zur Erfassung des von der Gleichspannungsquelle erzeugten über die Primärwicklung des Transformators fließende Stromes und Bildung eines Mittelwerts daraus vorgesehen ist, welche mit der Steuervorrichtung verbunden ist, und wobei der Brückenwechselrichter zur Anpassung der Totzeit der Schaltelemente in Abhängigkeit des erfassten Mittelwerts des Stromes ausgebildet ist, wobei in einer Tabelle zu verschiedensten Mittelwerten des Stromes entsprechende Totzeiten hinterlegt sind.

Zusätzlich kann der Brückenwechselrichter zur Anpassung einer Pulsdauer bzw. Frequenz für die Pulsweitenmodulation in Abhängigkeit der erfassten Mittelwertes des Stromes ausgebildet sein.

Die vorliegende Erfindung wird anhand der beigefügten Zeichnungen, welche Ausführungsbeispiele für das Verfahren und dem Solarwechselrichter beschreiben, näher erläutert.

Darin zeigen:
Fig. 1 ein Blockschaltbild einer Solaranlage mit einem Solarwechselrichters zum Einspeisen in ein Wechselspannungsnetzes, in vereinfachter, schematischer Darstellung;
Fig. 2 ein Diagramm des Schaltablaufes eines Brückenwechselrichters der Solarwechselrichters, in vereinfachter, schematischer Darstellung; und
Fig. 3 ein weiteres Diagramm für den Steuerablauf, in vereinfachter, schematischer Darstellung.

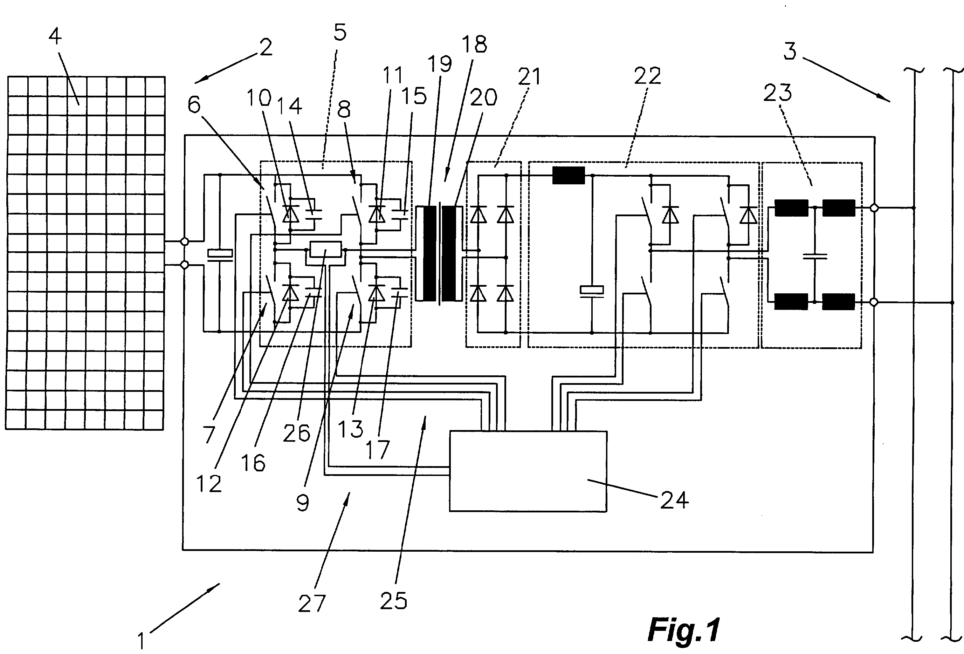

In Fig. 1 ist ein Schaltschema eines Solarwechselrichters 1 zum Einspeisen einer von einer Gleichspannungsquelle 2 erzeugten Energie in ein Wechselspannungsnetz 3 gezeigt. Zusätzliche Schutzvorrichtungen, beispielsweise zum Schutz vor Überlast, Kurzschluss usw. wurden in dem Schaltbild für eine bessere Übersicht nicht dargestellt.

Die Gleichspannungsquelle 2 wird durch ein Solarmodul 4 für die Energieerzeugung durch Sonneneinstrahlung gebildet. Das Solarmodul 4 ist an dem Solarwechselrichter 1 angeschlossen. Der Solarwechselrichter 1 besteht aus einem Brückenwechselrichter 5, bei dem mehrere Schaltelemente 6 bis 9, wie beispielsweise Thyristoren, Transistoren oder dgl., in Brückenschaltung angeordnet sind, so dass immer zwei Schaltelemente 6, 8 und 7, 9 in Serie geschaltet werden. Die Vollbrücke ist aus zwei zueinander parallel geschalteten Halbbrücken gebildet werden. Selbstverständlich ist es auch möglich, dass anstelle der gezeigten Vollbrücke nur eine Halbbrücke, also nur zwei Schaltelemente 6 und 8 oder 7 und 9 eingesetzt werden. Parallel zu jedem Schaltelement 6 bis 9 ist jeweils eine Diode 10 bis 13 und, wie schematisch eingezeichnet, jeweils eine parasitäre Kapazität 14 bis 17 angeordnet. Selbstverständlich können parallel zu den Dioden 10 bis 13 bzw. den Schaltelementen 6 bis 9 zu den parasitären Kapazitäten zusätzliche Kondensatoren 14 bis 17 parallel geschaltet sein.

Weiters weist der Solarwechselrichter 1 einen Transformator 18 auf, bei dem die Primärseite, also die Primärwicklung 19, zwischen den beiden seriell geschalteten Schaltelementen 6,8 und 7, 9, also im Mittelpunkt der Schaltelemente 6 bis 9, angeschlossen ist. Auf der Sekundärseite, des Transormators 18, also an der Sekundärwicklung 20 ist ein Gleichrichter 21, eine Glättungsdrossel mit Zwischenkreis-Kondensator, ein Tiefsetzsteller 22 mit einer daran angeschlossenen Vollbrücke, sowie ein Ausgangsfilter 23 angeschlossen, von dem die Einspeisung in das Wechselspannungsnetz 3 erfolgt.

Weiters weist der Solarwechselrichter 1 eine Steuervorrichtung 24 auf, mit der die Steuerung der einzelnen Schaltungsteile bzw. Schaltungsgruppen des Solarwechselrichters 1 erfolgt. Hierzu sind schematische Steuerleitungen 25 zu den einzelnen Schaltelemente 6 bis 9 eingezeichnet. Um die erzeugte Energie ermitteln zu können, ist auf der Primärseite des Transformators 18 eine Strommesseinheit 26 angeordnet, welche durch einen Shunt-Widerstand gebildet ist. Die Strommesseinrichtung 26 ist über Messleitungen 27 mit der Steuervorrichtung 24 verbunden. Somit kann von der Steuervorrichtung 24 der über die Strommesseinheit 26 fließende Strom bzw. die Spannung oder die Energie erfasst werden.

Auf die genaue Funktionsbeschreibung der einzelnen Schaltungsteile bzw. Schaltungsgruppen des Solarwechselrichters 1 wird nicht näher eingegangen, da diese bereits aus dem Stand der Technik hinlänglich bekannt sind. Lediglich wird kurz erwähnt, dass die von der Gleichspannungsquelle 2 erzeugte Energie vom Brückenwechselrichter 5 durch abwechselndes Schalten der parallel und seriell geschalteten Schaltelemente 6 bis 9, der Vollbrücke zerhackt und über den Transformator 18 übertragen wird. Die vom Transformator 18 übertragene Energie wird wiederum vom Gleichrichter 21 gleichgerichtet und über den Tiefsetzsteller 22 und die nachgeschaltete Vollbrücke und das Ausgangsfilter 23 schließlich in das Wechselspannungsnetz 3 eingespeist. Durch Modulation der Pulsweite kann die übertragene Energie geändert werden.

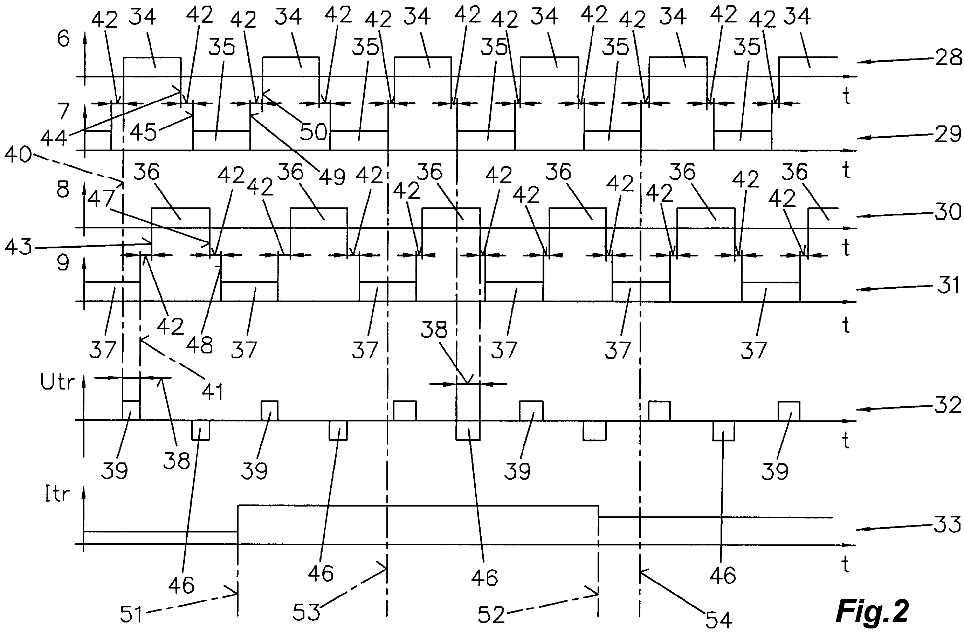

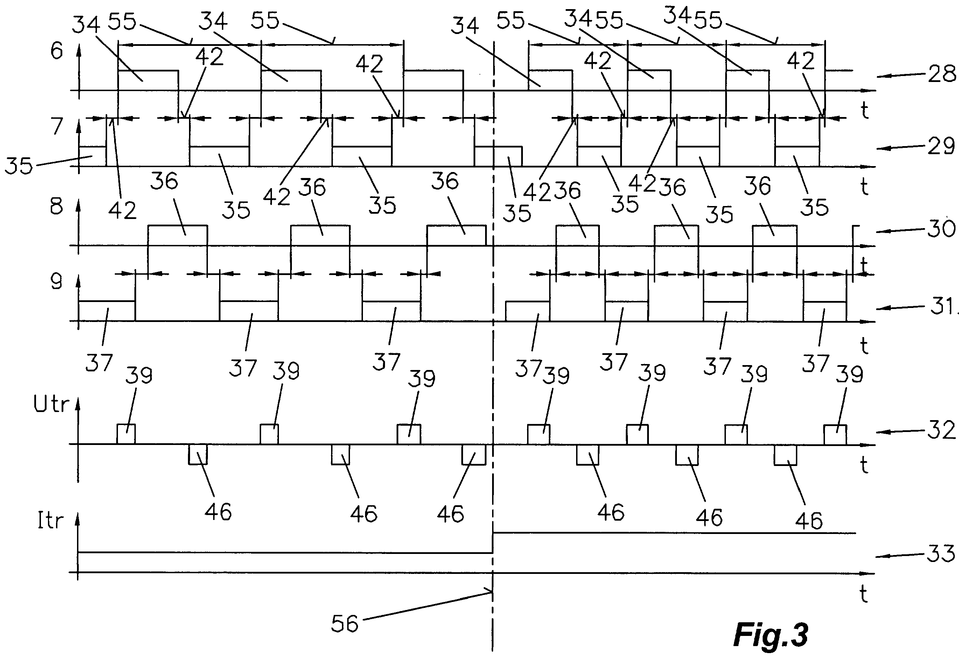

In den Fig. 2 und 3 ist nunmehr eine neuartige Ansteuerung des Brückenwechselrichters 5 gezeigt. Hierzu sind in den Diagrammen 28 bis 33 vereinfachte, optimierte Signalverläufe der Steuersignale zum Ansteuern der Schaltelemente 6 bis 9 der Brückenschaltung, die Spannung Uₜᵣ am Transformator 18 sowie der Strom Iₜᵣ durch die Strommesseinheit 26 in Abhängigkeit der Zeit dargestellt.

Bei bekannten Solarwechselrichtern 1, insbesondere bei dem darin angeordneten Brückenwechselrichter 5 auf der Primärseite des Transformators 18 erfolgt die Ansteuerung und Umschaltung durch eine fix definierte Frequenz sowie eine fix definierte Schaltzeit bzw. einen Schaltablauf, insbesondere einer fix definierten Totzeit. Eine Leistungsanpassung bzw. Leistungsveränderung des Solarwechselrichters 1 erfolgt bei bekannten Systemen über die Pulsweitenmodulation, wobei je nach gelieferter Energiemenge die Pulsweite, also die Einschaltdauer der Schaltelemente 6 bis 9 des Brückenwechselrichters 5 verändert wird.

Wie nun aus Fig. 2 ersichtlich, erfolgt der Ablauf eines pulsweitenmodulierten Brückenwechselrichters 5 derartig, dass immer zwei Schaltelemente 6, 9 und 7, 8 abwechselnd angesteuert werden. Dies ist in den Diagrammen durch entsprechende Ansteuerimpulse 34 bis 37 für die Schaltelemente 6 bis 9, die von der Steuervorrichtung 24 ausgesendet werden, ersichtlich. Über die Primärwicklung 19 des Transformators 18 fließt dann Energie, wenn die Schaltelemente 6 und 9 sowie 7 und 8 gleichzeitig durchgeschaltet sind. Dies kommt in der Abbildung den Zeiten gleich, in welchen die Ansteuerimpulse 34 und 37 der Schaltelemente 6 und 9 sowie 35 und 36 der Schaltelemente 7 und 8 einander überschneiden. Während dieser überschneidenden Schaltzeiten 38 findet somit eine Energieübertragung über den Transformator 18 statt, wie schematisch durch die Spannungsimpulse 39 im Diagramm des zeitlichen Verlaufs der Transformatorspannung Uₜᵣ dargestellt.

Sind beispielsweise die Schaltelement 6 und 9 gleichzeitig aktiviert, so kann ab einem Zeitpunkt 40 Energie über den Transformator 18 während der Schaltzeit 38 übertragen werden. Eine Aktivierung der Schaltelemente 7 und 8 bewirkt eine Energieübertragung mit einer Umkehr der Polarität der Spannung am Transformator 18. Der Umschaltvorgang erfolgt derartig, dass beispielsweise zum Zeitpunkt 41 das Schaltelement 9 deaktiviert wird, und nach Ablauf einer so genannten Totzeit 42 zum Zeitpunkt 43 das Schaltelement 8 angesteuert wird. Anschließend wird zum Zeitpunkt 44 das Schaltelement 6 deaktiviert und das Schaltelement 7 wiederum nach Ablauf einer Totzeit 42 zum Zeitpunkt 45 von der Steuervorrichtung 24 aktiviert. Somit wurde eine Umschaltung von den Schaltelementen 6 und 9 auf die Schaltelemente 7 und 8 durchgeführt. Damit kann nunmehr wiederum ein Stromfluss über die Primärwicklung 19 des Transformators 18 in entgegengesetzter Richtung, wie durch einen nunmehr negativen Spannungsimpuls 46 eingezeichnet, erfolgen, sodass eine weitere Energieübtragung auf die Sekundärseite des Transformators 18 stattfindet. Um wiederum auf die Schaltelemente 6 und 9 umzuschalten wird das Schaltelement 8 zum Zeitpunkt 47 deaktiviert und das Schaltelement 9 nach Ablauf der Totzeit 42 zum Zeitpunkt 48 aktiviert, worauf das Schaltelement 7 zum Zeitpunkt 49 deaktiviert und das Schaltelement 6 nach Ablauf der Totzeit 42 zum Zeitpunkt 50 aktiviert wird. Dieses abwechselnde kreuzweise Schalten der Schaltelemente 6 bis 9 der Brückenschaltung wird periodisch wiederholt, sodass eine entsprechende Energieübertragung stattfinden kann. Die Einschaltdauer der einzelnen Schaltelement 6 bis 9 wird durch die Pulsweite gesteuert, wodurch sich entsprechend längere oder kürzere Spannungsimpuls 39 und 46 am Transformator 18 für die Energieübertragung ergeben und somit eine entsprechende Leistungsänderung vorgenommen werden kann. Die Ansteuerung der Schaltelemente 6 bis 9 wird dabei von der Steuervorrichtung 24 vorzugsweise immer zu entsprechend festgelegten Zeitpunkten durchgeführt.

Selbstverständlich ist es möglich, dass beim Umschaltvorgang von einem Paar der Schaltelemente 6 und 9 auf das andere Paar der Schaltelemente 7 und 8 eine andere Reihenfolge durchgeführt werden kann. Beispielsweise kann ausgehend von aktivierten Schaltelementen 6, 9 zuerst das Schaltelement 6 deaktiviert werden und anschließend das Schaltelement 7 aktiviert werden und daraufhin das Schaltelement 9 deaktiviert und das Schaltelement 8 aktiviert werden. Anschließend wird das Schaltelement 7 wiederum deaktiviert und das Schaltelement 6 aktiviert, worauf das Schaltelement 8 deaktiviert wird und das Schaltelement 9 aktiviert wird. Dabei erfolgt das Umschalten bzw. Aktivieren der einzelnen Schaltelemente 6 bis 9 wiederum nach Ablauf der Totzeit 42, wie dies zuvor beschrieben wurde. Wesentlich ist, dass immer ein abwechselndes kreuzweises Schalten der Schaltelemente 6 bis 9 durchgeführt wird, und beim Umschaltvorgang immer zwei am gleichen Potential liegende Schaltelemente 6 bis 9 kurzzeitig gleichzeitig aktiviert sind.

Damit wird erreicht, dass die induktiv gespeicherte Energie im Transformator 18 die Kondensatoren 14 bis 17 umlädt, bis ein spannungsloses Umschalten der Schaltelemente 6 bis 9 möglich ist. Damit die Umladung möglich ist, sind zwischen dem Deaktivieren und dem Aktivieren der Schaltelemente 6 bis 9 die Totzeiten 42 vorgesehen, in der ein Umladen der Energie stattfinden kann. Erfolgt die Umschaltung zu früh, so dass nicht die gesamte gespeicherte Energie umgeladen wurde, so wird diese Energie beim Einschalten bzw. Aktiveren des nächsten Schaltelementes 6 bis 9 vernichtet und es entstehen hohe Schaltverluste, wobei die Schaltverluste bei Abschaltung bzw. Einschaltung unter Energiefluss proportional zum Quadrat der Spannung steigt. Ist hingegen die Umschaltung, also die Totzeit 42, zu lange gewählt, so wird zwar die vollständig gespeicherte Energie umgeladen, jedoch wird der Solarwechselrichter 1 nicht optimal betrieben, da bei der Energieübertragung Pausen durch die langen Schaltzeiten entstehen und dadurch das Spannungs-Zeit-Fenster für die Energieübertragung reduziert wird..

Erfindungsgemäß erfolgt nunmehr die Steuerung des Solarwechselrichters 1, insbesondere des Brückenwechselrichters 5, derartig, dass eine an die Energie der Gleichspannungsquelle 2, insbesondere des Solarmoduls 4 angepasste Umschaltung durch Anpassung der Totzeit 42, durchgeführt wird. Je nach gelieferter Energie der Gleichspannungsquelle 2 wird die Totzeit 42 zum Ein- und Ausschalten der Schaltelemente 6 bis 9 entsprechend definiert, sodass immer die gesamte Energie der parasitären und externen Kapazitäten 14 bis 17 umgeladen werden kann und gleichzeitig jedoch keine zu langen Schaltpausen für die Energieübertragung über den Transformator 18 entstehen können. Wird nämlich von der Gleichspannungsquelle 2 weniger Energie geliefert, so wird mehr Zeit (Totzeit 42) benötigt, um die parasitären und externen Kondensatoren 14 bis 17 umzuladen, als dies bei einer hohen Energielieferung von der Gleichspannungsquelle 2 der Fall ist.

Hierzu ist eine Erfassung der von der Gleichspannungsquelle 2 gelieferten Energie erforderlich, was durch die Strommesseinheit 26 erfolgt. Dadurch wird von der Steuervorrichtung 24 des Solarwechselrichters 1 eine entsprechende Auswertung der gelieferten Energie ermöglicht und somit eine automatische Festlegung der Totzeit 42 durchgeführt. Die Auswertung und Festlegung der Schaltzeitpunkte kann dabei auf die unterschiedlichsten Arten erfolgen.

Die Totzeit 42 wird in Abhängigkeit des Mittelwertes des Stromes Iₜᵣ durch die Primärwicklung 19 des Transformators 18 festgelegt. Dies geschieht derartig, dass von der Steuervorrichtung 24 zu bestimmten Zeitpunkte, beispielsweise nach Ablauf einer voreinstellbaren Zeitdauer, die von der Strommesseinheit 26 gelieferten Werte erfasst und daraus ein Mittelwert gebildet wird. Hat sich dieser Mittelwert gegenüber einem vorher ermittelten Mittelwert geändert, wird eine neue Totzeit 42 festgelegt. Somit wird nicht nach jeder Umschaltperiode eine neue Totzeit 42 festgelegt sondern erst nach mehreren Umschaltperioden. Dabei wird die Totzeit 42 durch entsprechend hinterlegten Daten in einer Tabelle, in der zu verschiedensten Mittelwerten entsprechende Totzeiten 42 hinterlegt sind, festgelegt.

Es ist auch möglich, dass eine ständige Überwachung des Energieflusses stattfindet und bei einer Änderung des Energieflusses von der Steuervorrichtung 24 reagiert wird und somit eine neue Totzeit 42 festgelegt wird. Ein derartiges Beispiel ist in Fig. 2 dargestellt, bei dem sofort in der darauf folgenden Umschaltperiode bei geändertem Energiefluss eine Änderung der Totzeit 42 durchgeführt wird. Ersichtlich ist dies in den Diagrammen zu den Zeitpunkten 51, 52. Dabei steigt der mittlere Energiefluss über die Primärwicklung 19 des Transformators 18 zum Zeitpunkt 51, worauf von der Steuervorrichtung 24 erkannt wird, dass nunmehr mehr Energie von der Gleichspannungsquelle 2 geliefert wird und somit mehr Energie in der parasitären Kapazität gespeichert ist. Daraufhin wird von der Steuervorrichtung 24 eine neue Totzeit 42, die nunmehr gegenüber der vorhergehenden Totzeit 42 geringer ist, festgelegt, die in der nächsten Umschaltperiode, wie ab den Zeitpunkt 53 ersichtlich, angewandt wird. Bei dem dargestellten Ausführungsbeispiel wird die Änderung der Totzeit 42 immer erst nach einer Umschaltperiode, also nachdem einmal eine Umschaltung aller Schaltelemente 6 bis 9 durchgeführt wurde, durchgeführt. Es ist jedoch auch möglich, dass sofort nach Erkennung einer Energieflussänderung mit dem nächsten Schaltvorgang eine Anpassung der Totzeit 42 vorgenommen werden kann. Zum Zeitpunkt 52 sinkt der Energiefluss wiederum, sodass eine neuerliche Anpassung der Totzeit 42 vorgenommen wird, da nunmehr wieder wengier Energie in der parasitären Induktivität gespeichert ist. Dies neue Totzeit 42 wird von der Steuervorrichtung 24 nach Abschluss der letzten Umschaltperiode eingesetzt, wie dies zum Zeitpunkt 54 ersichtlich ist. Da ab den Zeitpunkt 52 wiederum ein verringerter Stromfluss stattfindet, wird die Totzeit 42 gegenüber der vorhergehenden Totzeit 42 erhöht, um eine vollständige Umladung der in den parasitären Kondensatoren 14 bis 17 gespeicherten Energie zu ermöglichen.

Somit kann gesagt werden, dass je nach vorhandem Energiefluss auf der Primärseite des Transformators 18 eine entsprechende Anpassung der Totzeit 42 vorgenommen wird, so dass eine wesentliche Erhöhung des Wirkungsgrades des Wechselrichters erreicht wird. Es findet nicht mehr nur eine Anpassung der Pulsweite statt, sondern es werden die Schaltzeiten für die Schaltelemente 6 bis 9 entsprechend optimiert. Wesentlich ist also, dass die Totzeit 42 zum Umschalten von einem Schaltelement 6 bis 9 zu einem weiteren in Serie geschalteten Schaltelement 6 bis 9 des Brückenwechselrichters 5 in Abhängigkeit der erzeugten Energie von der angeschlossenen Gleichspannungsquelle 2 eingestellt wird. Dabei wird die von der Gleichspannungsquelle 2 erzeugte Energie insbesondere in zyklischen Abständen erfasst und entsprechend der festgestellten Energie die Totzeit 42 ermittelt bzw. bestimmt.

Um eine weitere Verbesserung des Wirkungsgrades einer Solaranlage zu erreichen, ist im nachstehend beschriebenen Ausführungsbeispiel gemäß Fig. 3 eine weitere Möglichkeit zur Anpassung an die Eingangsleistung des Solarwechselrichters 1 gezeigt. Dabei sind wiederum die einzelnen Diagramme 28 bis 33, wie bereits in Fig. 2 gezeigt, dargestellt.

Bei diesem Ausführungsbeispiel wird neben der Anpassung der Totzeit 42, entsprechend Fig. 2 noch eine zusätzliche Anpassung der Frequenz bzw. Periodendauer 55 für die Pulsweitenmodulation vorgenommen. Dabei wird je nach vorhandener Eingangsleistung die Periodendauer 55 bzw. die Schaltfrequenz für die Schaltelemente 6 bis 9 geändert, wie dies bei der Totzeit 42 der Fall ist. Selbstverständlich ist es möglich, dass der Solarwechselrichter 1 derart aufgebaut ist, dass nur eine Änderung der Totzeit 42 in Abhängigkeit der gelieferten Energie oder auch eine Änderung der Periodendauer 55 bzw. Frequenz in Abhängigkeit der gelieferten Energie stattfindet.

Beim dargestellten Ausführungsbeispiel gemäß Fig. 3 arbeitet der Solarwechselrichter 1, insbesondere der Brückenwechselrichter 5 bei entsprechender Eingangsenergie mit einer festgelegten Periodendauer 55 bzw. Frequenz. Ändert sich nunmehr die Eingangsenergie, wird diese also erhöht oder verringert, so erkennt dies die Steuervorrichtung 24, worauf eine entsprechende Änderung der Periodendauer 55 bzw. Frequenz vorgenommen wird. Dies ist zum Zeitpunkt 56 ersichtlich, bei dem eine Erhöhung der Eingangsenergie stattfindet, wie aus dem Stomverlauf Iₜᵣ entsprechend Diagramm 33 ersichtlich ist. Somit wird von der Steuervorrichtung 24 eine neue Periodendauer 55 bzw. Frequenz sowie eine neue Totzeit 42 berechnet bzw. festgelegt und bei der nächsten Umschaltperiode verwendet.

Die Festlegung der neuen Periodendauer 55 bzw. Frequenz kann dabei wie zuvor in Fig. 2 beschrieben erfolgen, d.h., dass die von der Gleichspannungsquelle 2 gelieferte Energie erfasst wird, sodass von der Steuervorrichtung 24 des Solarwechselrichters 1 eine entsprechende Auswertung der gelieferten Energie ermöglicht und somit eine automatische Festlegung der Periodendauer 55 bzw. Frequenz und der Totzeit 42 von dieser durchgeführt wird. Die Festlegung der Totzeit 42 und der Periodendauer 55 bzw. Frequenz kann aber auch durch eine Berechnung oder durch entsprechend hinterlegten Daten, also durch eine Tabelle bei der beispielsweise zu verschiedensten Mittelwerten entsprechende Periodendauer 55 bzw. Frequenzen und Totzeiten 42 hinterlegt sind, durchgeführt werden. Dabei findet die Festlegung der Totzeit 42 und Periodendauer 55 bzw. Frequenz aufgrund des Mittelwertes des Stromflusses Iₜᵣ durch die Primärwicklung 19 des Transformators 18 statt. Es ist aber auch möglich, dass eine ständige Überwachung des Energieflusses stattfindet und bei einer Änderung des Energieflusses von der Steuervorrichtung 24 reagiert wird und somit eine neue Totzeit 42 und Periodendauer 55 bzw. Frequenz festgelegt wird.

Der Vorteil der Anpassung der Periodendauer 55 bzw. Frequenz, an die gelieferte Energie liegt darin, dass immer die gesamte Pulsweite ausgenützt werden kann und somit eine optimaler Betrieb gewährleistet ist und dadurch die frequenzabhängigen Schaltverluste reduziert werden. Durch die Kombination mit der Änderung der Totzeit 42 wird auch sicher gestellt, dass immer die gesamten parasitären Kapazitäten umgeladen werden können, ohne dass hohe Schaltverluste auftreten können oder dass zu lange Schaltpausen für die Energieübertragung verhindert werden.

Es ist auch möglich, dass für die Änderung der Totzeit 42 und der Periodendauer 55 bzw. Frequenz ein spezieller Umschaltvorgang vorgenommen wird. Dabei wäre es möglich, dass beispielsweise die letzte Schaltperiode abgearbeitet wird und anschließend eine kurze Schaltpause für den Brückenwechselrichter 5 eingelegt wird, worauf beim neuerlichen Aktivieren des Brückenwechselrichters 5 die neue Periodendauer 55 bzw. Frequenz und Totzeit 42 eingesetzt wird. Dies hätte den Vorteil, dass dadurch immer ein bestimmter Startvorgang, insbesondere eine bestimmte definierter Schaltvorgang mit den gleichen Schaltelementen 6 bis 9, erreicht wird.

## Patentansprüche

1. Verfahren für einen Solarwechselrichter (1) zum Einspeisen einer von einer Gleichspannungsquelle (2) erzeugten Energie in ein Wechselspannungsnetz (3), bei dem die erzeugte Energie der Gleichspannungsquelle (2) von einem Brückenwechselrichter (5) durch abwechselndes Schalten von parallel und seriell geschalteten Schaltelementen (6-9) in Form einer Pulsweitenmodulation zerhackt wird und diese zerhackte Energie über einen Transformator (18), der zwischen den in Serie geschalteten Schaltelementen (6-9) angeschlossen ist, übertragen wird, worauf die übertragene Energie wiederum gleichgerichtet wird und über einen Tiefsetzsteller (22) in das Wechselspannungsnetz (3) eingespeist wird, wobei zur Leistungsanpassung die Schaltzeiten der Schaltelemente (6-9) des Brückenwechselrichters (5) gesteuert bzw. geregelt werden, wobei das Umschalten von einem Schaltelement (6-9) zu einem weiteren in Serie geschalteten Schaltelement (6-9) nach Ablauf einer Totzeit (42) erfolgt, sodass die in den Schaltelementen (6-9) gespeicherten parasitären Kapazitäten während der Totzeit (42) vollständig umgeladen werden, wobei der von der Gleichspannungsquelle (2) erzeugte über die Primärwicklung (19) des Transformators (18) fließende Strom in zyklischen Abständen oder permanent erfasst und daraus ein Mittelwert gebildet wird, und die Totzeit (42) zum Umschalten von einem Schaltelement (6-9) zu einem weiteren in Serie geschalteten Schaltelement (6-9) des Brückenwechselrichters (5) in Abhängigkeit des Mittelwerts des erfassten Stromes eingestellt wird, indem die Totzeit (42) der Schaltelemente (6-9) des Brückenwechselrichters (5) aus einer Tabelle ausgewählt wird, in welcher Tabelle für verschiedenste Mittelwerte des Stroms entsprechende Werte für die Totzeit (42) hinterlegt sind.

2. Verfahren nach Anspruch 1, **dadurch gekennzeichnet, dass** eine Periodendauer (55) bzw. Frequenz für die Pulsweitenmodulation zum Umschalten der Schaltelemente (6-9) des Brückenwechselrichters (5) in Abhängigkeit des erfassten Stromes über die Primärwicklung (19) des Transformators (18) eingestellt wird.

3. Verfahren nach Anspruch 1 oder 2, **dadurch gekennzeichnet, dass** die Schaltzeiten der Schaltelemente (6-9) des Brückenwechselrichters (5) in Abhängigkeit des erfassten Stromes über die Primärwicklung (19) des Transformators (18) ausgewertet und automatisch festgelegt werden.

4. Verfahren nach einem der Ansprüche 1 bis 3, **dadurch gekennzeichnet, dass** die Schaltelemente (6-9) zu entsprechend festgelegten Zeitpunkten angesteuert werden.

5. Solarwechselrichter (1) zum Einspeisen einer von einer Gleichspannungsquelle (2) erzeugten Energie in ein Wechselspannungsnetz (3), mit einem Brückenwechselrichter (5) zum Zerhacken der erzeugten Energie der Gleichspannungsquelle (2) in Form einer Pulsweitenmodulation durch abwechselndes Umschalten von Schaltelementen (6-9) unter Anwendung einer Totzeit (42) beim Umschalten von einem Schaltelement (6-9) zu einem weiteren in Serie geschalteten Schaltelement (6-9) zur vollständigen Umladung der in den Schaltelementen (6-9) gespeicherten parasitären Kapazitäten, weiters mit einem Transformator (18), einem Gleichrichter (21), einem Tiefsetzsteller (22) mit einer Vollbrücke und einem Ausgangsfilter (23), wobei eine Steuervorrichtung (24) zur Steuerung der Parameter des Wechselrichters (1) vorgesehen ist, wobei eine Strommesseinrichtung (26) zur Erfassung des von der Gleichspannungsquelle (2) erzeugten über die Primärwicklung (19) des Transformator (18) fließenden Stromes vorgesehen ist, welche mit der Steuervorrichtung (24) verbunden ist, wobei ferner Mittel zur Mittelwertbildung des Stromes, der zyklisch oder permanent erfasst wird, bereit gestellt werden, der Brückenwechselrichter (5) zur Anpassung der Totzeit (42) der Schaltelemente (6-9) in Abhängigkeit des erfassten über die Primärwicklung (19) des Transformators (18) fließenden Stromes ausgebildet ist, und die Totzeit der Schaltelemente des Brückenwechselrichters aus einer Tabelle ausgewählt wird, in welcher Tabelle für verschiedenste Mittelwerte des Stroms entsprechende Werte für die Totzeit hinterlegt sind.

6. Solarwechselrichter nach Anspruch 5, **dadurch gekennzeichnet, dass** der Brückenwechselrichter (5) zur Anpassung einer Pulsdauer (55) bzw. Frequenz für die Pulsweitenmodulation in Abhängigkeit des erfassten über die Primärwicklung (19) des Transformators (18) fließenden Stromes ausgebildet ist.

## Claims

1. Method for a solar inverter (1) for feeding energy generated by a DC voltage source (2) into an AC voltage network (3), in which the generated energy from the DC voltage source (2) is chopped in the form of pulse-width modulation by a bridge inverter (5) by alternately switching switching elements (6-9) that are connected in parallel and in series, and said chopped energy is transmitted via a transformer (18) which is connected between the switching elements (6-9) connected in series, whereupon the transmitted energy is in turn rectified and fed into the AC voltage network (3) via a buck converter (22), wherein the switch times of the switching elements (6-9) of the bridge inverter (5) are controlled in order to adjust the power, wherein switching from one switching element (6-9) to a further switching element (6-9) connected in series takes place after a dead time (42) has passed, such that the parasitic capacitances stored in the switching elements (6-9) are completely recharged during the dead time (42), wherein the current generated by the DC voltage source (2) and flowing through the primary coil (19) of the transformer (18) is recorded at cyclic intervals or continuously and an average value is determined therefrom, and the dead time (42) for switching from one switching element (6-9) to a further switching element (6-9), connected in series, of the bridge inverter (5) is set on the basis of the average value of the recorded current by the dead time (42) of the switching elements (6-9) of the bridge inverter (5) being selected from a table in which corresponding values for the dead time (42) are given for a wide range of average values of the current.

2. Method according to claim 1, **characterized in that** a cycle duration (55) or frequency for the pulse-width modulation for switching the switching elements (6-9) of the bridge inverter (5) is set on the basis of the recorded current through the primary coil (19) of the transformer (18).

3. Method according to either claim 1 or claim 2, **characterized in that** the switch times of the switching elements (6-9) of the bridge inverter (5) are analyzed and automatically determined on the basis of the recorded current through the primary coil (19) of the transformer (18).

4. Method according to any of claims 1 to 3, **characterized in that** the switching elements (6-9) are actuated at appropriately determined times.

5. Solar inverter (1) for feeding energy generated by a DC voltage source (2) into an AC voltage network (3), comprising a bridge inverter (5) for chopping the generated energy from the DC voltage source (2) in the form of pulse-width modulation by alternately switching switching elements (6-9) using a dead time (42) when switching from one switching element (6-9) to a further switching element (6-9) connected in series in order to completely recharge the parasitic capacitances stored in the switching elements (6-9), further comprising a transformer (18), a rectifier (21), a buck converter (22) having a full bridge and an output filter (23), wherein a controller (24) is provided for controlling the parameters of the inverter (1), wherein a current measurement device (26) is provided for recording the current generated by the DC voltage source (2) and flowing through the primary coil (19) of the transformer (18), which device is connected to the controller (24), wherein further means are provided for generating an average value of the current, which is recorded cyclically or continuously, the bridge inverter (5) is designed to adjust the dead time (42) of the switching elements (6-9) on the basis of the recorded current flowing through the primary coil (19) of the transformer (18), and the dead time of the switching elements of the bridge inverter is selected from a table in which corresponding values for the dead time are given for a wide range of average values of the current.

6. Solar inverter according to claim 5, **characterized in that** the bridge inverter (5) is designed to adjust a pulse duration (55) or frequency for the pulse-width modulation on the basis of the recorded current flowing through the primary coil (19) of the transformer (18).

## Revendications

1. Procédé d'introduction, par un onduleur solaire (1), d'une énergie générée par une source de tension continue (2) dans un réseau à tension alternative (3), dans lequel l'énergie générée par la source de tension continue (2) est hachée par un onduleur à pont (5) par commutation alternée d'éléments de commutation (6 à 9) branchés en parallèle et en série et cette énergie hachée est transmise, par l'intermédiaire d'un transformateur (18), qui est raccordé entre les éléments de commutation (6 à 9) branchés en série, l'énergie transmise étant alors redressée et introduite dans le réseau à tension alternative (3) par l'intermédiaire d'un convertisseur abaisseur (22), moyennant quoi, pour l'adaptation de la puissance, les temps de commutation des éléments de commutation (6 à 9) de l'onduleur à pont (5) étant contrôlés ou régulés, la commutation d'un élément de commutation (6 à 9) vers un autre élément de commutation (6 à 9) branché en série ayant lieu après l'écoulement d'un temps mort (42), de façon à ce que les capacités parasitaires accumulées dans les éléments de commutation (6 à 9) soient complètement déchargées pendant le temps mort (42), le courant généré par la source tension continue (2) s'écoulant par l'enroulement primaire (19) du transformateur (18) étant mesuré à intervalles cycliques ou en permanence et une valeur moyenne en est déduite, et le temps mort (42) pour la commutation d'un élément de commutation (6 à 9) vers un autre élément de commutation (6 à 9) branché en série de l'onduleur à pont (5) étant réglé en fonction de la valeur moyenne du courant mesuré, grâce au fait que le temps mort (42) des éléments de commutation (6 à 9) de l'onduleur à pont (5) est sélectionné dans un tableau dans lequel, pour différentes valeurs moyennes du courant, sont enregistrées des valeurs correspondantes pour le temps mort (42).

2. Procédé selon la revendication 1, **caractérisé en ce qu'**une durée de période (55) ou une fréquence pour la modulation par largeur d'impulsion permettant la commutation des éléments de commutation (6 à 9) de l'onduleur à pont (5) est réglée en fonction du courant mesuré traversant l'enroulement primaire (19) du transformateur (18).

3. Procédé selon la revendication 1 ou 2, **caractérisé en ce que** les temps de commutation des éléments de commutation (6 à 9) de l'onduleur à pont (5) sont analysés et fixés automatiquement en fonction du courant mesuré traversant l'enroulement primaire (19) du transformateur (18).

4. Procédé selon l'une des revendications 1 à 3, **caractérisé en ce que** les éléments de commutation (6 à 9) sont contrôlés à des moments définis de manière appropriée.

5. Onduleur solaire (1) pour l'introduction d'une énergie générée par une source de tension continue (2) dans un réseau à tension alternative (3), avec un onduleur à pont (5) pour le hachage de l'énergie générée par la source de tension continue (2) sous la forme d'une modulation par largeur d'impulsion par commutation alternée d'éléments de commutation (6 à 9) en utilisant un temps mort (42) lors de la commutation d'un élément de commutation (6 à 9) vers un autre élément de commutation (6 à 9) branché en série, pour la décharge complète des capacités parasitaires accumulées dans les éléments de commutation (6 à 9), avec un transformateur (18), un redresseur (21), un convertisseur abaisseur (22) avec un pont intégral et un filtre de sortie (23), un dispositif de commande (24) étant prévu pour la commande des paramètres de l'onduleur (1), un dispositif de mesure de courant (26) étant prévu pour la mesure du courant généré par la source de tension continue (2) s'écoulant à travers l'enroulement primaire (19) du transformateur (18), qui est relié avec le dispositif de commande (24), des moyens pour la détermination de la valeur moyenne du courant, qui est mesurée de manière cyclique ou en permanence, étant mis à disposition, l'onduleur à pont (5) étant conçu pour l'adaptation du temps mort (42) des éléments de commutation (6 à 9) en fonction du courant mesuré s'écoulant à travers l'enroulement primaire (19) du transformateur (18) et le temps mort des éléments de commutation de l'onduleur à pont étant sélectionné dans un tableau dans lequel, pour différentes valeurs moyennes du courant, sont enregistrées des valeurs correspondantes pour le temps mort.

6. Onduleur solaire selon la revendication 5, **caractérisé en ce que** l'onduleur à pont (5) est conçu pour l'adaptation d'une durée d'impulsion (55) ou d'une fréquence pour la modulation par largeur d'impulsion en fonction du courant mesuré s'écoulant à travers l'enroulement primaire (19) du transformateur (18).
